# EUROPEAN PATENT SPECIFICATION

(11) **EP 2 802 117 B1**
(45) Date of publication and mention of the grant of the patent: **28.11.2018**
(21) Application number: 13167367.5
(22) Date of filing: 10.05.2013
(51) Int. Cl.: H04L 29/06, H04L 29/12, H04L 12/801

(54) **A system and method for relaying data based on a modified reliable transport protocol**
System und Verfahren zur Datenübermittlung auf Basis eines modifizierten zuverlässigen Transportprotokolls
Système et procédé permettant de relayer des données basées sur un protocole de transport fiable modifié

(43) Date of publication of application: 12.11.2014
(73) Proprietor: BlackBerry Limited, Waterloo, ON N2K 0A7 (CA)
(72) Inventor: Gammon, Scott, Peter, Waterloo, Ontario N2L 3W8 (CA); Puri, Ajay, Mississauga, Ontario L4W 0B5 (CA)
(74) Representative: MERH-IP Matias Erny Reichl Hoffmann Patentanwälte PartG mbB

(56) References cited:
- US-A1- 2005 249 230
- CHRIS ROSS ED - ANONYMOUS: "The Future of SCPS as an Acceleration Solution", MILITARY COMMUNICATIONS CONFERENCE, 2007. MILCOM 2007. IEEE, IEEE, PISCATAWAY, NJ, USA, 29 October 2007 (2007-10-29), pages 1-7, XP031232381, ISBN: 978-1-4244-1512-0
- ANNA BRUNSTRÖM ET AL: "Enhancing TCP Performance by Allowing Controlled Loss", PROCEEDINGS SSGRR 2000 COMPUTER & EBUSINESS CONFERENCE, 31 July 2000 (2000-07-31), XP055073922, L'Aquila, Rome
- PHILOPOULOS S ET AL: "Proxy-based connection-splitting architectures for improving TCP performance over satellite channels", IEEE CANADIAN CONFERENCE ON ELECTRICAL AND COMPUTER ENGINEERING. CCECE 2002. WINNIPEG, MANITOBA, CANADA, MAY 12 - 15, 2002; [CANADIAN CONFERENCE ON ELECTRICAL AND COMPUTER ENGINEERING], NEW YORK, NY : IEEE, US, vol. 3, 12 May 2002 (2002-05-12), pages 1430-1435, XP010707516, DOI: 10.1109/CCECE.2002.1012963 ISBN: 978-0-7803-7514-7
- Ccsds Secretariat: "CCSDS RECOMMENDED STANDARD FOR SCPS TRANSPORT PROTOCOL (SCPS-TP)" In: "Recommendation for Space Data System Standards", 31 October 2006 (2006-10-31), National Aeronautics and Space Administration, Washington, XP055073818, pages 1-116, * pages 3-15 - pages 3-16 *

## Description

### Field of Invention

The present invention relates generally to network processes, and more particularly to network processes for relay of data.

### Background

Network communications are based on protocols. Protocols allow different network components such as devices and servers to communicate in a harmonious manner. A suite of protocols can be used to define different functionality needed to communicate data from one network component to another. Some protocols can be tailored to achieve desired characteristics for data communications. For example, reliable protocols can implement reliability mechanisms that increase the reliability of the data communications. Other protocols may be best-effort and thus unreliable. When communicating through firewalls, not all protocols may be available.
In "The Future of SCPS as an Acceleration Solution", Military Communications Conference, 29 October 2007, IEEE, by Chris Ross, a basic PEP (Performance Enhancing Proxies) architecture for military satellite communication is illustrated, in which transport layer PEPs break an end-to-end TCP connection, run an optimized SCPS-TP protocol across a satellite link, and spoof the TCP connection between a client and a server.
Anna Brunstrom et al. suggest an extension to TCP for partial reliability called PRTP (Partially Reliable Transport Protocol), published as "Enhancing TCP Performance by Allowing Controlled Loss" in Proceedings SSGRR 2000 Computer & Business Conference, 31 July 2000, L'Aquila, Rome. As an example application for PRTP, an image recoding proxy system is also presented.
The US Patent Application US 2005/0249230 A1 discloses systems and methods for implementing an acknowledgement mechanism for transmission of a real-time data stream from a sending system to a receiving system.

### Summary

According to an aspect, a method for performing on a relay is provided, as defined in appended claim 1.

The modified reliable transport protocol can be based on and can be compatible with the unmodified reliable protocol. The unmodified reliable protocol can include reliability mechanisms and modified reliable transport protocol can include modified reliability mechanisms. The modified reliability mechanisms can be based on the reliability mechanisms.

The receiving of data can comprise receiving a first packet and subsequently a second packet generated based on a sequence. The processing can comprise processing the second packet in accordance with the modified reliability mechanisms. The sequence can include intervening packets between the first packet and the second packet.

The processing of the second packet can include relaying the second packet prior to receiving the intervening packets. Processing the second packet can also include sending an acknowledgement of the second packet and the intervening packets. Processing the second packet can include passing up the second packet to the Application Layer prior to receiving the intervening packets.

The processing of the data can include acknowledging a number of packets periodically by sending one or more acknowledgement messages. The number of packets acknowledged can include unreceived packets. The number of packets acknowledged can be determined based on a historical rate of package reception. The number of packets acknowledged can be determined based on a characteristic of the data.

The method can further comprise relaying the second packet using an unreliable transport protocol. The unreliable transport protocol can be one of User Datagram Protocol (UDP) or Real-time Transport Protocol (RTP) over UDP. The relaying can be based on the Traversal Using Relays around NAT (TURN) protocol. The unmodified reliable transport protocol can be Transport Control Protocol (TCP).

Receiving data can further comprise receiving the intervening packets and the processing can further comprise relaying the intervening packets after relaying the second packet.

According to another aspect, a server is provided. The server can comprise:
a processor;
a network interface operably connected to the processor;
the processor configured for: perfoming the method of appended claim 1.

### Brief Description of Drawings

FIG. 1 shows a block diagram of an aspect of a system for relaying data based on a modified reliable transport protocol;
FIG. 2 shows a block diagram of an aspect of a relay for relaying data based on a modified reliable transport protocol;
FIG. 3 shows a flow chart indicating a method of relaying data based on a modified reliable transport protocol; and
FIG. 4 shows a block diagram of another aspect of a system for relaying data based on a modified reliable transport protocol.

### Detailed Description

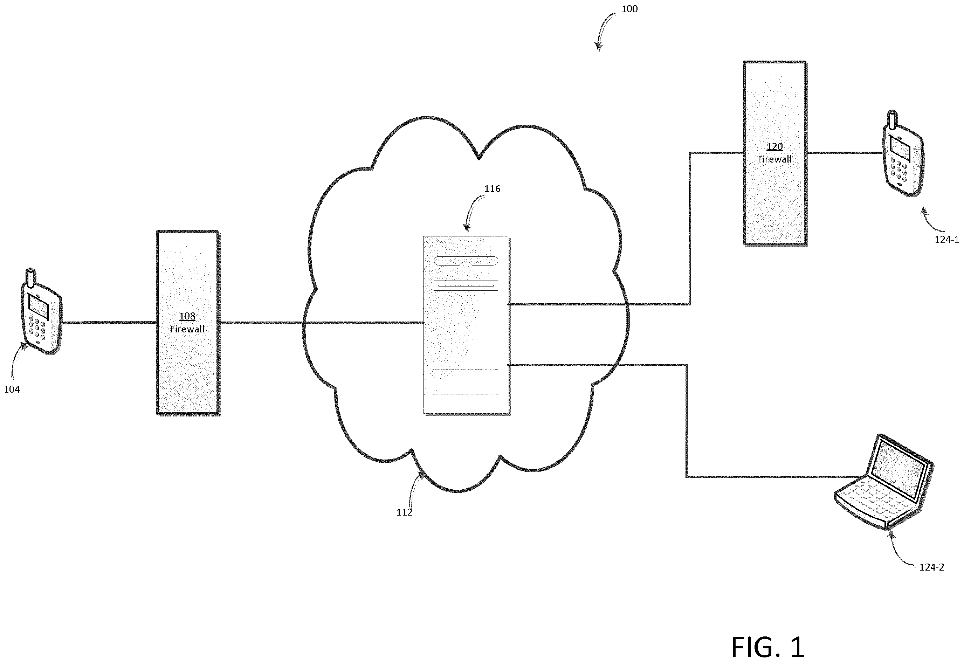

FIG. 1 depicts a communications system 100. System 100 includes a client 104, which in the present example is a network component based on the computing environment and functionality of a hand-held wireless client. Client 104 is not limited to a hand-held wireless client, however. Other devices are also contemplated, such as cellular telephones, smart telephones, Personal Digital Assistants ("PDAs"), media (e.g. MP3) players, laptop computers, tablet computers and the like. In other examples, client 104 can be a computing device such as a desktop computer, an embedded computer, a server or other computing device.

Client 104 is connected to network 112 through a firewall 108. Network 112 is a publicly available network such as the internet or other wide area network (WAN). Other types of public networks will now occur to a person of skill. The connection to network 112 allows client 104 to perform multi-media streaming and other data and voice communications with other network components including other devices such as peers 124 via network 112. A peer 124 can be a handheld client 124-1 or a laptop 124-2, but is not limited to such devices. Other devices are also contemplated, such as cellular telephones, smart telephones, Personal Digital Assistants ("PDAs"), media (e.g. MP3) players, laptop computers, tablet computers and the like. In other examples, a peer 124 can be a computing device such as a desktop computer, an embedded computer, a server or other computing device.

Firewall 108 is a security component that controls traffic that is reachable to client 104 through various methods, therefore assisting in the prevention of unsecure and untrusted communications from reaching client 104. Firewall 108's objective is to control the incoming and outgoing network traffic by determining whether data should be allowed through or not. Accordingly, firewall 108 attempts to reduce unsecure and untrusted communications and/or peers 124 that can reach client 104. Thus, client 104 is typically referred to as being behind firewall 108. Firewall 108 can be implemented in hardware or software.

Firewalls often have network address translation (NAT) functionality, and the network components protected behind a firewall commonly have network addresses that are not visible to peers 124 trying to access client 104 through network 112. Accordingly, firewalls often have functionality to hide the true network address of protected network components. Hiding the addresses of protected network components has become an increasingly important defense against unsecure and untrusted access to a network component behind a firewall. Accordingly, when client 104 is behind the firewall 108, only firewall 108 and other network elements also behind firewall 108 can access client 104 directly through its network address. A device or a network element that is outside the firewall 108's protection, such as those connected to network 112 would need to send data to firewall 108. Firewall 108, upon receiving the data intended for client 104, can map the address the communications is received at, to the network address of the client 104 and send the communications to the client 104. Various methods can be used to effect the address mapping such as overloading, overlapping and others that will now occur to a person of skill in the art.

Another functionality of firewall 108 is to filter the types of communications protocols that can be used to access devices and network elements behind the firewall. A communications protocol is a system of message formats and rules for exchanging communications between network components connected to a network such as network 112. For example, communications protocols define the syntax, semantics, and synchronization of communications that is to take place on network 112, as well as proper addressing for components connected to the network. Accordingly, communications protocols work in harmony to enable transport of data between network components including peers 124 and other computing devices. In order to communicate through network 112, a network component uses the communications protocols that are utilized by other components of the network 112, which in this example are based on the Internet protocol suite. Other communications protocols that can be utilized by network 112 will now occur to those of skill in the art. In the present non-limiting example, it'll be assumed that firewall 108 only allows communications based on the Transport Control Protocol (TCP) to enhance the protection of network components behind the firewall.

A client 104 behind firewall 108 can exchange data packets with peers 124, some of which may also be behind firewalls, as is the case with peer 124-1 which is located behind the firewall 120. To do this, the client 104 can use methods such as "hole punching" techniques in an attempt discover a direct communication path with a peer 124. To find a direct communications path, a path is typically identified that goes from client 104 to a peer 124 through intervening firewalls and routers, but does not traverse any relays. Direct communications path discovery techniques can fail for numerous reasons. For example, if both hosts are behind NATs that are not well behaved, a direct communications path may not be found. Alternatively, communications using certain communications protocols can also be prevented by a firewall. Accordingly, a peer 124 trying to reach client 104 using one of the blocked communications protocols will also be unsuccessful in establishing a direct communications path with the client 104.

When a direct communications path cannot be found, services of an intermediate host that acts as a relay for the communications, such as relay 116 can be used. A relay typically sits in a public network such as network 112 and relays packets between the client 104 and peers 124. A relay protocol such as Traversal Using Relays around NAT (TURN) can be used that can allow a relay 116 to act as a relay for communications to and from client 104. Accordingly, client 104 can arrange for relay 116 to relay packets to and from certain peers 124 and can control aspects of how the relaying is done. A relay 116 can be implemented as hardware and/or software.

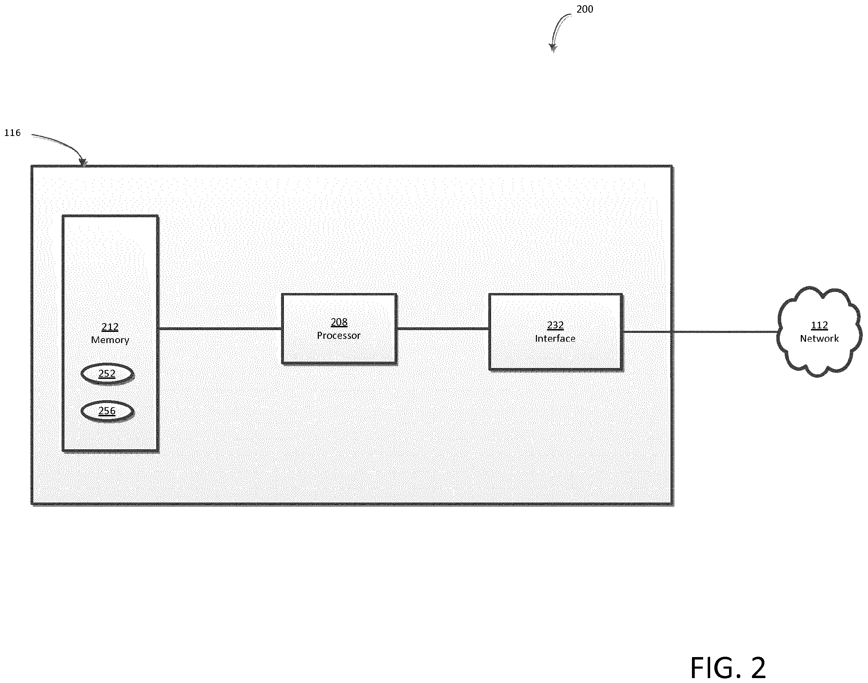

Referring to FIG. 2, an example relay 116, based on a server is indicated at 200. Relay 116 includes at least one main processor 208 that controls the overall operation of the relay 116. Main processor 208 is interconnected with a computer readable storage medium such as a memory 212. Memory 212 can be any suitable combination of volatile (e.g. Random Access Memory ("RAM")) and non-volatile (e.g. read only memory ("ROM")), Electrically Erasable Programmable Read Only Memory ("EEPROM"), flash memory, magnetic computer storage device, or optical disc memory. In the present example, memory 212 includes both volatile memory and non-volatile memory. Other types of non-transitory computer readable storage medium are also contemplated, such as compact discs (CD-ROM, CD-RW), digital video discs (DVD), secure digital (SD) cards, flash drives, and variants thereof.

Relay 116 also includes a communications interface 232 interconnected with processor 208. Communications interface 232 allows relay 116 to perform communications via network 112. Accordingly, in this non-limiting example, the communication interface 232 receives data from and sends data to network 112. In this example implementation of relay 116, the communication interface 232 is configured in accordance with an Ethernet network, although in variations interface 232 can be configured to communicate with other wired and wireless networks.

In use, a received signal or data such as data messages corresponding to a text message, an e-mail message, an audio or video chat or web page download will be processed by the communication interface 232 and input to the processor 108. The main processor 108 will then process the received signal and relay it to other network components as appropriate, through communications interface 232.

Relay 116 can also include one or more additional elements (not shown) such as input devices, output devices and other devices interconnected with main processor 208.

Relay 116 maintains, in memory 212, a plurality of computer readable instructions executable by processor 208. Such instructions can include, for example, an operating system and a variety of other applications or modules. For example, as illustrated in Figure 2, relay 116 maintains a network module 256, and a relay module 252 (such as a server application based on the TURN protocol).

When processor 208 executes the instructions of network module 252, or a relay module 256, processor 208 is configured to perform various functions implemented by the computer readable instructions of the respective applications or modules. It is contemplated that memory 112 can store a variety of additional applications or modules, such as a server management application and others (not shown).

In general, processor 208 is configured, via the execution of network module 252, to enable relay 116 to perform communications through network 112 using the communications protocols utilized by network 112, such as TCP/IP.

Communications protocols are typically architected in a layered fashion. For example, the Internet protocol suite is a set of communications protocols used for the Internet and similar networks, and generally a popular protocol stack for wide area networks. It is commonly known as TCP/IP (Transmission Control Protocol/Internet protocol), because of the prominence of the protocols TCP and IP which it includes. Internet protocol suite typically comprises of the 4 layers indicated in Table 1. At this point it will occur to a person of skill that other protocol suites exist with different layering architectures, and these other protocols can be implemented by network module 256 in place of or in addition to the 4 layer Internet protocol suite based on the requirements of communications with network 112.

**Table 1: Layers of the communications protocol TCP/IP**

| |
|---|
| Application Layer |
| Transport Layer |
| Internet Layer |
| Link Layer |

Referring to Table 1, the Link Layer defines protocols that describe the network topology and interfaces needed for a network component to access a physical network such as an Ethernet network. Accordingly, when data arrives intended for a specific network component such as relay 116, it is received from the Ethernet by the Link Layer and passed up to the Internet Layer. Conversely, data to be sent by relay 116 to other network components is received by the Link Layer from the Internet Layer and transmitted through the Ethernet using the communications interface 232.

The Internet Layer is responsible for enabling the sending and receiving of data from a network component. A commonly used protocol for the internet layer is the Internet Protocol (IP). In order to facilitate a network component sending or receiving data using a network 112, IP implements an addressing function. IP addressing entails the assignment of IP addresses and associated parameters to network components' network interfaces such as interface 232. Accordingly, data to be transmitted by the network component is received from the Transport Layer, appropriately addressed by adding the IP address of the intended destination component and passed down to the Link Layer to be placed on the physical network. Conversely, data received by a network component through the Link Layer is processed to remove the IP addressing related parameters and passed up to the Transport Layer.

The Transport Layer establishes component-to-component connectivity, meaning it handles the details of data transmissions that are independent of the application data and the logistics of exchanging information for any particular specific purpose. Its responsibility includes end-to-end data transfer independent of the underlying network, along with error control, segmentation, flow control, congestion control, application addressing through port numbers and others that will now occur to a person of skill in the art.

The Transport Layer establishes a basic data communication channel that an application uses in its task-specific data exchange. End to end message transmission carried out by the Transport Layer can be categorized as either reliable, for example as implemented by Transmission Control Protocol (TCP), or best-effort, and thus unreliable for example as implemented by User Datagram Protocol (UDP) or Real-time Transport Protocol (RTP) which is typically built on UDP transport (RTP over UDP). It will now occur to a person of skill in the art that other transport protocols exist that are either reliable or unreliable, and such protocols are contemplated.

The Transport Layer establishes the concept of a port, a numbered construct allocated specifically to each of the communication channels an application needs. For many types of services, these port numbers have been standardized so that a network component, such as a client 104, can address specific services of another network component, such as a web server. The combination of the IP address and the port allows precise targeting of data to a specific application executing on a specific network component. This combination is referred to as a transport address.

TCP is a reliable connection-oriented transport protocol that addresses numerous reliability issues and aims to provide reliable data communications between network components. For example, TCP typically includes reliability mechanisms:
- sequence mechanisms for in-order and in-sequence processing of data packets;
- acknowledgement and retransmission mechanisms to reduce lost/discarded packets;
- flow control mechanisms to control data transmission rates at ranges that can be processed by the receiving network component; and
- traffic congestion control mechanisms for achieving communications without congestion collapse where network performance can slow down by several orders of magnitude.

It will now occur to a person of skill that other reliability mechanisms can be included in a protocol and that such mechanisms are contemplated.

Sequence mechanism is provided to allow a receiving network component, namely the receiver, to reliably process received data. Accordingly, at a network component sending data, namely the sender, TCP accepts the data to be sent from the Application Layer, segments it into packets, and adds a TCP header creating a TCP segment. The data packets thus created are then passed down to the Internet Layer to be processed by IP by being encapsulated with addressing and related information. Each data packet is numbered based on a sequence mechanism such that the data packets generated are numbered based on the ordered sequence with sequence numbers such as 1, 2, 3, 4, 5 in a non-limiting simplified example. The packets are meant to be received and combined in accordance with this order and in this sequence based on the sequence mechanism. Accordingly, at the receiver, the data packets are received and combined in the same order and sequence.

As a data packet arrives at a receiver, it is passed up from the Internet Layer to the Transport Layer and processed by the TCP. TCP then combines the packets, as appropriate, and passes the combined packets as data to the application layer. However, only those data packets that are in compliance of the sequence mechanism are passed up. For example, if packets with sequence numbers 1, 2 and 5 are received, packets with sequence numbers 1 and 2 are combined and passed up since they are in order and sequence, but the packet with the sequence number 5 is held back since that packet is not in sequence relative to the previous highest ordered packet received, namely the packet with the sequence number 2. Accordingly, the packet with the sequence number 5 will be sent up to the Application Layer after packets with sequence numbers 3 and 4 are received and processed.

Since packet transfer through a network is not reliable, packets can get lost and not arrive at a receiver. Positive acknowledgment and retransmission mechanisms are used to address reliability of packet transfers. Accordingly, the network component sending the data, the sender, keeps a record of each packet it sends. The network component receiving the data, the receiver, responds with an acknowledgment message as it receives each packet. The sender also keeps a timer for a packet, and starts the timer at the time the packet is sent. The sender retransmits a packet if, based on the timer, a predetermined time lapses before the reception of the acknowledgement message for that packet. The timer is needed in case a packet gets lost or corrupted and thus never reaches the receiver. Continuing with the simplified example, when packets with the sequence numbers 1, 2 and 5 are received at the receiver, an acknowledgement is sent for them. If an acknowledgement is not received for packets with sequence numbers 3 and 4 based on a predetermined time, packets with sequence numbers 3 and 4 will be resent based on the assumption that they are lost (i.e. were never received by the receiver since they were not acknowledged).

Flow control mechanisms are used to address the reliability issue that if the rate of transmission from a sender is too high, the receiver may not be able to process it. According to this mechanism, the receiver continually provides to the sender information on how much data can be received, as controlled, for example, by a sliding window. As an example, when the receiver's data reception buffer fills, the next acknowledgment sent by the receiver can contain an indication of window or packet size such as the value 0, to indicate that data transfer should be stopped to allow the data in the receiver's buffer to be processed. Once sufficient space opens up in the buffer, the acknowledgment sent for the last processed packet can include a value larger than 0 for the window or packet size to start the transfer.

Congestion control mechanisms involve methods such as slow start to control the rate of data entering the network. Acknowledgements for data sent, or lack of acknowledgements, are used by the sender to infer network congestion conditions between it and the receiver, and methods like slow start are used to adjust the communications rate to match the congestion level. For example, according to the slow-start mechanism, initial transmission from the sender starts with a small window or packet size. The window or packet size is increased as the sent packets are acknowledged by the receiver. The growth is stopped when packets get lost as indicated by lack of acknowledgement.

Transport Layer protocols that include reliability mechanisms, namely reliable transport protocols, are useful for transporting data where reliability is important and data loss is highly undesirable. For example, for text based messaging applications such as SMS, IM, email and others, reliability is paramount since receiving the message in its entirety is crucial. Same considerations apply for applications involving document or file transfer. On the other hand, reliable transport protocols are less useful for applications where data loss is not as important, such as audio or video streaming or messaging, online gaming and other multi-media applications. In fact, the use of such protocols for these types of applications can be disadvantageous by introducing additional latency and other transmission issues that are disadvantageous for these types of applications. For these applications, best-effort protocols can be more appropriate.

As an example, User Datagram Protocol is a connectionless datagram protocol. Like IP, it is a best-effort, "unreliable" protocol. UDP is typically used for applications such as streaming media (audio, video, voice over IP and others that will now occur to a person of skill) where on-time arrival is more important than reliability, or for simple query/response applications like DNS lookups, where the overhead of setting up a reliable connection is disproportionately large. Reliability can be partially addressed through error detection mechanisms such as a checksum method, but such a mechanism does not provide the level of reliability that the reliability mechanisms of a reliable transport protocol provides. RTP over UDP is also a transport protocol that is designed for real-time data such as streaming audio and video.

The Application Layer contains the higher-level protocols used by most applications executing on a network component for network communication. Examples of Application Layer protocols include the File Transfer Protocol (FTP), Real Time Messaging protocol (RTMP), and the Simple Mail Transfer Protocol (SMTP). Data coded according to Application Layer protocols are encapsulated into one or (occasionally) more transport layer protocols (such as TCP or UDP), which in turn use lower layer protocols to effect actual data transfer. For example, the Real Time Streaming Protocol (RTSP) is an application-level streaming protocol that can use multiple protocols in the Transport Layer to transmit its packets, including UDP and Transmission Control Protocol (TCP). Sometimes application-level protocols are written specifically for a particular transport protocol, like RTP over UDP.

Application Layer protocols generally treat the Transport Layer (and lower) protocols as black boxes which provide a stable network connection across which to communicate, although the applications are usually aware of certain aspects of the lower layer protocols such as transport addresses.

Turning back to FIG. 2, memory 212 also includes relay module 256. In general, processor 208 is configured, via the execution of relay module 256, to allow relay 116 to relay data between client 104 and a peer 124. In a non-limiting example, relay module 256 implements a relay based on the TURN protocol, namely a TURN server. In this example, relay module 256 calls upon network module 252 to perform network communications such as sending and receiving data.

In order to use the relay services offered by relay 116, client 104 sends and receives communications between its transport address and client transport address on the relay 116. The client 104 can learn the client transport address through a variety of means (for example through a configuration of the client 104), and this address is typically used by many clients simultaneously.

Since client 104 is behind firewall 108, relay 116 sees packets from the client 104 as coming from a transport address on the firewall 108. This address is known as the client 104's server-reflexive transport address; packets sent by relay 116 to the client 104's server-reflexive transport address is forwarded by the firewall 108 to the client 104's transport address.

Client 104 can establish one or more relayed transport addresses at relay 116. The client 104 does this by obtaining one or more IP addresses and ports on relay 116 which are then reserved for client 104. Relayed transport addresses established by client 104 are the transport addresses on the relay 116 that peers 124 can use to have data relayed to the client 104. When a peer 124 sends a packet to a relayed transport address for client 104, relay 116 relays the packet to client 104. When client 104 sends a data packet to relay 116, relay 116 relays it to the appropriate peer 124 using one of client 104's relayed transport addresses as the source.

Establishment and manipulation of relayed transport addresses can be accomplished by creating and maintaining allocations or profiles for the client 104, such as a data structure, on relay 116. An allocation contains, amongst other things, one or more relayed transport addresses reserved for the client 104.

Once an allocation is created, the client 104 can send data from an application running on the client 104, such as a multimedia chat application, to the relay 116 along with an indication of which peer 124 the data is to be sent to. Relay 116 subsequently relays this data to the indicated peer 124. In this example implementation, the client 104, being behind firewall 108 that only allows the reliable protocol TCP, sends and receives application data to the relay 116 using TCP packets. It will now occur to a person of skill that in communicating with relay 116, other reliable protocols, such as secure protocols such as TLS over TCP can be also used. Given that the example application used is a multi-media application, at the relay 116, the data is processed and sent to a peer 124 based on an unreliable, best-effort UDP datagram. It will now occur to a person of skill that in communicating with relay 116, other unreliable or best effort protocols, such as RTP over UDP, can be also used. In the reverse direction, a peer 124 sends application data in UDP datagrams to the relayed transport address for the client 104. Relay 116 then process the data and send it to the client along with an indication of which peer 124 sent the data using TCP packets.

Based on the example configuration of system 100 as indicated in FIG. 1, client 104 communicates with relay 116 using the TCP protocol. Relay 116 communicates with peers 124 using the UDP protocol (it is assumed that peer 124 can receive UDP traffic through firewall 120). Accordingly, relay 116, in effect, performs protocol translation as well as relay functions. In some implementations, relay 116 can utilize a modified reliable transport protocol to improve communication characteristics with client 104 with regards to real-time multimedia applications and other applications with similar communications characteristics. The modified transport protocol can take the form of the modified TCP described below. It will now occur to a person of skill in the art that in variations other reliable protocols, unreliable protocols and modified reliable protocols can be used.

As discussed above, a reliable protocol such as TCP is disadvantageous for certain applications that may be executing on client 104, such as voice messaging or video messaging applications. In these cases, the use of TCP can lead to added latency and other issues that arise from reliability mechanisms used to make TCP a reliable transport. However, UDP or RTP over UDP cannot be used since firewall 108 blocks those transports. Accordingly a modified reliable transport protocol such as a modified TCP can be employed on server 116 for communications with client 104.

The modifications to a reliable protocol allow it to be compatible with its unmodified version, such as TCP, while alleviating some of the disadvantages associated with the use of real-time multi-media applications such as a streaming video application or a video-chat application by modifying some of the reliability mechanisms. The compatibility enables relay 116 to communicate using the modified transport protocol with the client 104 that is using an unmodified transport protocol. Because the modified reliable protocol is compatible with the reliable protocol from which it was derived, relay 116 can communicate with any network component behind the firewall 108 using the modifications since no modifications are needed to be performed on network components besides relay 116.

The modifications can be achieved by making alterations to network module 252 such that the implementation of the transport layer is altered to give effect to the modifications to the reliability mechanisms for example. In one implementation, all data destined to client 104 would be relayed using the modified protocol. In other implementations, both the modified and the unmodified versions of the reliable protocol can be maintained on the relay 116, by for example maintaining two versions of network module 252, or by modularizing network module 252 such that it can access different versions of the transport protocol as needed. The relay can utilize the modified protocol for certain types of data communications such as communications involving multi-media chats or streaming and others where latency affects communications quality. For other types of applications, such as email, the unmodified reliable protocol can be used. The type of protocol to be used can be determined by deep packet analysis, through communications from client 104, port numbers used for communication or other methods that will now occur to a person of skill in the art. In other variations, the modified reliable protocol can be used when the communications with a peer is based on an unreliable protocol such as UDP or RTP over UDP. Other methods of determining when to use a modified protocol will now occur to a person of skill in the art.

Modifications typically involve modifications to the reliability mechanisms such as the sequencing mechanisms, acknowledgement and retransmission mechanisms and others. In one implementation, a received packet that is not in sequence can be passed up to the Application Layer to be processed and relayed by the relay application 256 in contradiction with the sequencing mechanisms of TCP. Accordingly, if a frame or a portion of a frame of a video being streamed is delayed, the rest of the transmission is not delayed in order to receive the delayed frame or portion. In variations, when the packets prior in sequence to the out of sequence packet are received (after the out of sequence packet is already passed up to the Application Layer) they are also passed up to the Application Layer.

Retransmission and acknowledgement mechanisms can also be modified. Accordingly, relay 116 can send an acknowledgement message not just for an out of sequence packet, but for all the unreceived intervening packets between it and the previously received message that was acknowledged, as determined based on the sequence. Accordingly, based on the simplified example above, when relay 116 receives packets with sequence numbers 1, 2 and 5 in that order, relay 116 would send an acknowledgement for not just those packets but also for the intervening packets with sequence numbers 3 and 4, even though packets with sequence numbers 3 and 4 were never received, preventing their retransmission in contradiction with the retransmission and acknowledgement reliability mechanisms. In variations, if packets 3 and 4 are received after they are acknowledged, they are still processed and passed up to the Application Layer.

Additionally, relay 116, using the modified protocol can generate periodic acknowledgements to prevent retransmission of stale data, once again in contradiction with the acknowledgement and retransmission reliability mechanisms. For example, at each interval of a predetermined period, relay 116 can send an acknowledgement message to the client 104 despite having not received a packet at that time. Which packet or packets to acknowledge at each time period can be based on various methods. For example, relay 116 can track the average number of packets received at each time period and acknowledge all of those packets that ought to have been received based on the average number, acknowledging even those packets that were not received. For example, if relay 116 determines that 50 packets are received every 10 milliseconds on average, then every 10 milliseconds, relay 116 would count up 50 packets from the packet with the highest sequence number that was last acknowledged based on the periodic acknowledgement, and acknowledge all packets that fall in that sequence range that were not already acknowledged, whether they were received or not. Accordingly, if the highest numbered packet to have been acknowledged during the last periodic acknowledgement at 2 seconds had sequence number 1000, at 2.01 seconds, packets with sequence numbers 1001 through 1050 would be acknowledged. In one implementation, if some of those packets were already received and acknowledged, only the ones that were not received and acknowledged, are acknowledged. In other implementations, the determination of the packets to acknowledge at periodic intervals can be based on the type of data being relayed. For example, if the data being relayed is a video stream, the periodic acknowledgements can be timed with each frame of the video such that any data packets belonging to a video frame is acknowledged at the end of the time period when the video frame ought to have been received, thus preventing retransmission of stale data such as data for frames that have already been processed. The type of data being relayed can be determined from deep packet inspection, can be communicated by the client 104 or a peer 124, or through other mechanisms that will now occur to a person of skill in the art.

In other implementations, packets being sent from client 104 to relay 116 can also be based on the modified transport protocol. For example, in one implementation, modified transport protocol can bypass the use of slow-start and transmit at high data rates immediately. The transmission rate chosen can be based on the requirements of the communications. For example, for a video chat application, the rate chosen can be that which allows video and audio to be transmitted at or near the bandwidths required for the application, the audio quality chosen, video resolution and frame rate. The initial rate can also be adjusted on the basis of network characteristics such as bandwidth available, type of connection for client 104 or relay 116 (wireless, wired, cellular), requirements of the firewall 108 and others that will now occur to a person of skill in the art.

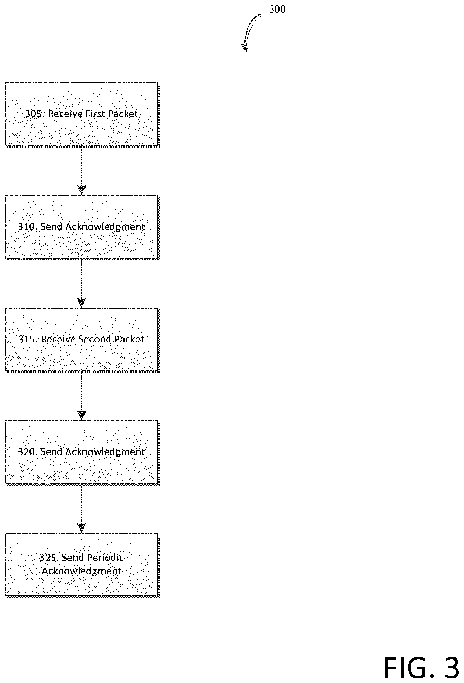

Referring now to FIG. 3, a method relaying data based on a modified reliable transport protocol is indicated at 300. In order to assist in the explanation of the method, it'll be assumed that method 300 is operated using system 100 as shown in FIG.1. Additionally, the following discussion of method 300 leads to further understanding of system 100. However, it is to be understood that system 100, and method 300 can be varied, and need not work exactly as discussed herein in conjunction with each other, and that such variations are within scope.

At 305 a first packet is received at relay 116. The packet is received from the physical network by the Link Layer, and passed up, through IP layer to the modified TCP protocol. It will be assumed for this example that the sequence number of the packet is 1000 and that it was sent from client 104.

Continuing with method 300 at 310 an acknowledgement message is sent in accordance with the TCP protocol and the acknowledgement and retransmission mechanisms. The acknowledgement message is sent to client 104 by relay 116 to acknowledge the reception of the packet with the sequence number 1000. At this point, it is assumed that the packet is also sent up to the Application Layer for relaying to a peer using UDP, although in variations, the packet can be held for a period to be combined with other received packets that are adjacent in the sequence before providing it to the Application Layer.

At 315 a second packet is received at relay 116. The packet is received from the physical network by the Link Layer, and passed up, through IP layer to the modified TCP protocol. It will be assumed for this example that the sequence number of the packet is 1050 and that it was sent from client 104.

Continuing with method 300 at 320 an acknowledgement message is sent in accordance with the TCP protocol. The acknowledgement message is sent to client 104 by relay 116 to acknowledge the reception of packet with the sequence number 1050. Additionally, acknowledgement is sent for packets with sequence numbers between 1001 through 1049. At this point, the packet with the sequence number 1050 is also sent up to the Application Layer for relaying to a peer using UDP.

At 325 a periodic acknowledgement is sent. It is assumed that a specified period is expired, which for this example will be assumed to be 100 milliseconds. Accordingly, relay 116 sends a periodic acknowledgement every 100 milliseconds based on a historical rate of packets received, which in this case will be assumed to be 100 packets for every 100 milliseconds. It is assumed that the last packet to have been acknowledged at the last periodic acknowledgement point 100 milliseconds prior to the current periodic acknowledgement point was packet with the sequence number 975. Accordingly, packets with sequence numbers 976 through 1075 are acknowledged at this periodic acknowledgement point. However, since in this example, packets with sequence numbers up till 1050 have already been acknowledged, only packets with the sequence numbers 1051 through 1075 are acknowledged.

In variations, the number of packets acknowledged can vary at each periodic acknowledgement point based on varying historical rate. Alternatively, the number of packets acknowledged can be a constant. In other variations, the number of packets acknowledged can be set based on overall communications capacity or other network characteristic.

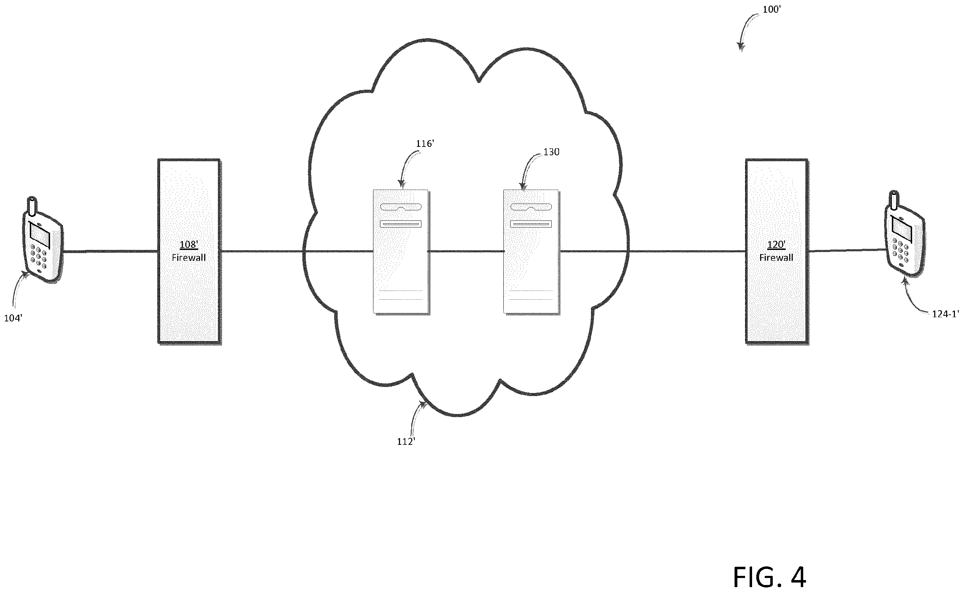

In a variation, as shown in Fig. 4, a peer 124 that is behind a firewall can itself be communicating through a relay as well. FIG. 4 depicts a communications system 100'. Components of system 100' are similar to the similarly numbered components of system 100. System 100' includes a client 104', which in the present example, similar to client 104 of system 100, is a network component based on the computing environment and functionality of a hand-held wireless client. Client 104' is not limited to a hand-held wireless client, however. Other devices are also contemplated, such as cellular telephones, smart telephones, Personal Digital Assistants ("PDAs"), media (e.g. MP3) players, laptop computers, tablet computers and the like. In other examples, client 104' can be a computing device such as a desktop computer, an embedded computer, a server or other computing device.

Client 104' is connected to network 112' through a firewall 108'. Network 112' is a publicly available network such as the internet or other wide area network (WAN). Other network types will now occur to a person of skill. Accordingly, the connection allows client 104' to perform multi-media and other data and voice communications with other network components including other devices such as a peer 124-1' via network 112'. Peer 124-1', similar to peer 124-1 of system 100, is a handheld client, but is not limited to such devices. Other devices are also contemplated, such as cellular telephones, smart telephones, Personal Digital Assistants ("PDAs"), media (e.g. MP3) players, laptop computers, tablet computers and the like. In other examples, a peer can be a computing device such as a desktop computer, an embedded computer, a server or other computing device. Peer 124-1' is located behind firewall 120', similarly to system 100.

Firewall 108' and 120', similar to firewall 108 and 120 of system 100, are security components that control traffic that is reachable to client 104 through various mechanisms, therefore assisting in the prevention of unsecure and untrusted communications from reaching client 104' and peer 124-1' respectively. Firewall 108' and 120' also have (NAT) functionality. Another functionality of a firewall 108' and 120' is to filter the types of communications protocols that can be used to access devices and network elements behind the firewall. In the present non-limiting example, it'll be assumed that firewall 108' and 120'only allow communications based on the Transport Control Protocol (TCP).

When a direct communication path cannot be found between client 104' and peer 124-1', services of an intermediate host that acts as a relay for the communications, such as relay 116' and 130 can be used. A relay typically sits in a public network such as network 112' and relays packets between a client and a peer. A relay protocol such as TURN can be used that can allow a relay 116' to act as a relay for communications to and from client 104'. Accordingly, client 104' can arrange for relay 116' to relay packets to and from peer 124-1' and can control aspects of how the relaying is done. A relay 116' can be implemented as hardware and/or software. A relay protocol such as TURN can also be used to allow relay 130' to act as a relay for communications to and from peer 124-1'. Accordingly, peer 124-1' can arrange for relay 130 to relay packets to and from client 104' and can control aspects of how the relaying is done. A relay 130 can be implemented as hardware and/or software.

Based on the configuration of system 100', in one implementation, client 104' communicates with relay 116' using the TCP protocol. Relay 116' communicates with Relay 130 using the UDP protocol. Peer 124-1' communicates with relay 130 using, once again, the TCP protocol. Accordingly, the relays 130 and 116' perform protocol translation as well as relay functions. In some implementations, relay 116' and relay 130' can utilize a modified transport protocol to improve communication characteristics with client 104' and peer 124-1' respectively. The modified transport protocol can take the form of the modified TCP described above. Accordingly, method 300 can be operated using system 100' as shown in FIG.4. However, it is to be understood that system 100', and method 300 can be varied, and need not work exactly as discussed herein in conjunction with each other, and that such variations are within scope. In particular method 300 can illustrate the functionality of both relay 116' or 130, but in the case of relay 130, the communications using the modified protocol referred to in method 300 are with peer 124-1' rather than client 104'. It will now occur to a person of skill in the art that modified transport protocols can apply to communications between a relay and a network component where the communications use a reliable transport protocol.

The above-described implementations are intended to be examples and alterations and modifications may be effected thereto, by those of skill in the art, without departing from the scope which is defined solely by the claims appended hereto.

## Claims

1. A method for relaying multimedia communications between a client (104) and a peer (124), wherein the method is performed on a relay (116) and comprises the steps of:
receiving data communicated from the client (104) through a publicly available network (112) in accordance with an unmodified reliable transport protocol;
wherein said receiving data comprises receiving a first packet and subsequently a second packet, said first packet and second packet generated based on a sequence,
wherein said sequence includes intervening packets between said first packet and said second packet;
determining whether the received data is of a first type corresponding to multimedia communications data;
if the received data is of the first type, processing said second packet in accordance with a modified reliable transport protocol, said modified reliable transport protocol being based on and being compatible with said unmodified reliable protocol; and
wherein said processing of said second packet includes relaying said second packet to the peer (124) in accordance with the modified reliable transport protocol prior to receiving said intervening packets, said receiving further comprising receiving said intervening packets and said processing further comprising relaying said intervening packets to the peer (124) in accordance with the modified reliable transport protocol after relaying said second packet.

2. The method of claim 1, wherein the relay (116) has two versions of a network module (252) or a modularized network module (252) such that both the unmodified reliable transport protocol and the modified reliable transport protocol can be accessed by the network module(s) (252) as needed.

3. The method of claim 1 or 2, wherein:
the received data is either of the first type corresponding to multimedia communications data or of a second type corresponding to non-multimedia communications; and
said determining comprises determining whether the received data is of the first type or of the second type.

4. The method of claim 3, comprising:
if the received data is of the first type, processing, using a first version of a network module (252) or a first module of the modularized network module (252), said second packet in accordance with the modified reliable transport protocol, and
if the received data is of the second type, processing, using a second version of a network module (252) or a second module of the modularized network module (252), said first packet, said second packet and said intervening packets in accordance with the unmodified reliable transport protocol.

5. The method of any of the preceding claims wherein the unmodified reliable protocol includes reliability mechanisms and modified reliable transport protocol includes modified reliability mechanisms, said modified reliability mechanisms being based on said reliability mechanisms.

6. The method of any of the preceding claims wherein said processing said second packet includes sending an acknowledgement of said second packet and said intervening packets prior to receiving said intervening packets.

7. The method of any of the preceding claims wherein processing said second packet includes passing up said second packet to the Application Layer prior to receiving said intervening packets.

8. The method of any of the preceding claims wherein said processing of said data includes acknowledging a number of packets periodically by sending one or more acknowledgement messages.

9. The method of claim 8 wherein said number of packets acknowledged includes unreceived packets.

10. The method of claim 8 wherein said number of packets acknowledged is determined based on a historical rate of package reception.

11. The method of claim 8 wherein said number of packets acknowledged is determined based on a characteristic of said data.

12. The method of any of the preceding claims wherein said unmodified reliable transport protocol is the Transport Control Protocol, TCP.

13. The method of any of the preceding claims wherein said relaying is based on the Traversal Using Relays around NAT, TURN, protocol.

14. The method of any of the preceding claims wherein said method further comprises: relaying said second packet using one of the User Datagram Protocol, UDP, or the Real-time Transport Protocol, RTP, over UDP.

15. A server (200) comprising:
a processor (208);
a network interface (232) operably connected to said processor (208);
said processor (208) configured for performing the method of any of the preceding claims.

## Patentansprüche

1. Verfahren zur Übermittlung von Multimediakommunikationen zwischen einem Client (104) und einem Peer (124), wobei das Verfahren an einem Relais (116) ausgeführt wird und folgende Schritte umfasst:
Empfangen von Daten, die von dem Client (104) über ein öffentlich zugängliches Netzwerk (112) kommuniziert werden, gemäß einem nicht modifizierten verlässlichen Transportprotokoll,
wobei das Empfangen der Daten das Empfangen eines ersten Pakets und danach eines zweiten Pakets umfasst, wobei das erste Paket und das zweite Paket basierend auf einer Sequenz erzeugt werden,
wobei die Sequenz Zwischenpakete zwischen dem ersten Paket und dem zweiten Paket beinhaltet,
Bestimmen, ob die empfangenen Daten von einer ersten Art sind, die Multimediakommunikationsdaten entspricht,
Verarbeiten des zweiten Pakets gemäß einem modifizierten verlässlichen Transportprotokoll, wenn die empfangenen Daten von der ersten Art sind, wobei das modifizierte verlässliche Transportprotokoll auf dem nicht modifizierten verlässlichen Transportprotokoll basiert und mit diesem kompatibel ist, und
wobei das Verarbeiten des zweiten Pakets das Übermitteln des zweiten Pakets an den Peer (124) gemäß dem modifizierten verlässlichen Transportprotokoll vor dem Empfangen der Zwischenpakete beinhaltet, wobei das Empfangen ferner das Empfangen der Zwischenpakete umfasst und das Verarbeiten ferner das Übermitteln der Zwischenpakete an den Peer (124) gemäß dem modifizierten verlässlichen Transportprotokoll nach dem Übermitteln des zweiten Pakets umfasst.

2. Verfahren nach Anspruch 1, wobei das Relais (116) zwei Versionen eines Netzwerkmoduls (252) oder ein modularisiertes Netzwerkmodul (252) aufweist, so dass bei Bedarf durch die Netzwerkmodule (252) auf sowohl das nicht modifizierte verlässliche Transportprotokoll als auch das modifizierte verlässliche Transportprotokoll zugegriffen werden kann.

3. Verfahren nach Anspruch 1 oder 2, wobei die empfangenen Daten entweder von der ersten Art sind, die Multimediakommunikationsdaten entspricht, oder von einer zweiten Art, die Nicht-Multimediakommunikationen entspricht, und
das Bestimmen das Bestimmen umfasst, ob die empfangenen Daten von der ersten Art oder von der zweiten Art sind.

4. Verfahren nach Anspruch 3, Folgendes umfassend:
Verarbeiten des zweiten Pakets gemäß dem modifizierten verlässlichen Transportprotokoll mit Hilfe einer ersten Version eines Netzwerkmoduls (252) oder eines ersten Moduls des modularisierten Netzwerkmoduls (252), wenn die empfangenen Daten von der ersten Art sind, und
Verarbeiten des ersten Pakets, des zweiten Pakets und der Zwischenpakete gemäß dem nicht modifizierten verlässlichen Transportprotokoll mit Hilfe einer zweiten Version eines Netzwerkmoduls (252) oder eines zweiten Moduls des modularisierten Netzwerkmoduls (252), wenn die empfangenen Daten von der zweiten Art sind.

5. Verfahren nach einem der vorhergehenden Ansprüche, wobei das nicht modifizierte verlässliche Transportprotokoll Verlässlichkeitsmechanismen beinhaltet und das modifizierte verlässliche Transportprotokoll modifizierte Verlässlichkeitsmechanismen beinhaltet, wobei die modifizierten Verlässlichkeitsmechanismen auf den Verlässlichkeitsmechanismen basieren.

6. Verfahren nach einem der vorhergehenden Ansprüche, wobei das Verarbeiten des zweiten Pakets das Senden einer Bestätigung des zweiten Pakets und der Zwischenpakete vor dem Empfangen der Zwischenpakete beinhaltet.

7. Verfahren nach einem der vorhergehenden Ansprüche, wobei das Verarbeiten des zweiten Pakets das Übertragen des zweiten Pakets auf die Anwendungsschicht vor dem Empfangen der Zwischenpakete beinhaltet.

8. Verfahren nach einem der vorhergehenden Ansprüche, wobei das Verarbeiten der Daten das periodische Bestätigen einer Anzahl an Paketen durch Senden einer oder mehrerer Bestätigungsnachrichten beinhaltet.

9. Verfahren nach Anspruch 8, wobei die Anzahl bestätigter Pakete nicht empfangene Pakete beinhaltet.

10. Verfahren nach Anspruch 8, wobei die Anzahl bestätigter Pakete basierend auf einer historischen Rate des Paketempfangs bestimmt wird.

11. Verfahren nach Anspruch 8, wobei die Anzahl bestätigter Pakete basierend auf einer Eigenschaft der Daten bestimmt wird.

12. Verfahren nach einem der vorhergehenden Ansprüche, wobei das nicht modifizierte verlässliche Transportprotokoll das TCP (Transport Control Protocol) ist.

13. Verfahren nach einem der vorhergehenden Ansprüche, wobei das Übermitteln auf dem TURN- (Traversal Using Relays around NAT)-Protokoll basiert.

14. Verfahren nach einem der vorhergehenden Ansprüche, wobei das Verfahren ferner Folgendes umfasst:
Übermitteln des zweiten Pakets mit Hilfe des UDP (User Datagram Protocol) oder des RTP (Real-time Transport Protocol), über UDP.

15. Server (200), Folgendes umfassend:
einen Prozessor (208),
eine Netzwerk-Schnittstelle (232), die funktionsfähig mit dem Prozessor (208) verbunden ist,
wobei der Prozessor (208) dafür konfiguriert ist, das Verfahren nach einem der vorhergehenden Ansprüche auszuführen.

## Revendications

1. Procédé pour relayer des communications multimédias entre un client (104) et un pair (124), où le procédé est exécuté sur un relais (116) et comprend les étapes consistant à :
recevoir des données communiquées depuis le client (104) par l'intermédiaire d'un réseau disponible publiquement (112) conformément à un protocole de transport fiable non modifié ;
où ladite réception de données comprend la réception d'un premier paquet et subséquemment d'un second paquet, ledit premier paquet et ledit second paquet étant générés sur la base d'une séquence,
où ladite séquence inclut des paquets intermédiaires entre ledit premier paquet et ledit second paquet ;
déterminer si les données reçues sont d'un premier type correspondant aux données de communications multimédias ;
si les données reçues sont du premier type, traiter ledit second paquet conformément à un protocole de transport fiable modifié, ledit protocole de transport fiable modifié étant basé sur et étant compatible avec ledit protocole fiable non modifié ; et
dans lequel ledit traitement dudit second paquet inclut le relais dudit second paquet au pair (124) conformément au protocole de transport fiable modifié avant la réception desdits paquets intermédiaires, ladite réception comprenant en outre la réception desdits paquets intermédiaires et ledit traitement comprenant en outre le relais desdits paquets intermédiaires au pair (124) conformément au protocole de transport fiable modifié après le relais dudit second paquet.

2. Procédé selon la revendication 1, dans lequel le relais (116) a deux versions d'un module de réseau (252) ou d'un module de réseau modularisé (252) de sorte qu'à la fois le protocole de transport fiable non modifié et le protocole de transport fiable modifié puissent faire l'objet d'un accès par le(s) module(s) de réseau (252) tel que nécessaire.

3. Procédé selon la revendication 1 ou 2, dans lequel :
les données reçues sont soit du premier type correspondant à des données de communications multimédias soit d'un second type correspondant à des communications non multimédias ; et
ladite détermination comprend la détermination quant à savoir si les données reçues sont du premier type ou du second type.

4. Procédé selon la revendication 3, comprenant :
si les données reçues sont du premier type, le traitement, en utilisant une première version d'un module de réseau (252) ou un premier module du module de réseau modularisé (252), dudit second paquet conformément au protocole de transport fiable modifié, et
si les données reçues sont du second type, le traitement, en utilisant une seconde version d'un module de réseau (252) ou un second module du module de réseau modularisé (252), dudit premier paquet, dudit second paquet et desdits paquets intermédiaires conformément au protocole de transport fiable non modifié.

5. Procédé selon l'une quelconque des revendications précédentes, dans lequel le protocole fiable non modifié inclut des mécanismes de fiabilité et le protocole de transport fiable modifié inclut des mécanismes de fiabilité modifiés, lesdits mécanismes de fiabilité modifiés étant basés sur lesdits mécanismes de fiabilité.

6. Procédé selon l'une quelconque des revendications précédentes, dans lequel ledit traitement dudit second paquet inclut l'envoi d'un accusé de réception dudit second paquet et desdits paquets intermédiaires avant la réception desdits paquets intermédiaires.

7. Procédé selon l'une quelconque des revendications précédentes, dans lequel ledit traitement dudit second paquet inclut le fait de passer vers le haut ledit second paquet à la couche application avant la réception desdits paquets intermédiaires.

8. Procédé selon l'une quelconque des revendications précédentes, dans lequel ledit traitement desdites données inclut le fait d'accuser réception d'un nombre de paquets périodiquement en envoyant un ou plusieurs messages d'accusé de réception.

9. Procédé selon la revendication 8, dans lequel ledit nombre de paquets ayant fait l'objet d'un accusé de réception inclut des paquets non reçus.

10. Procédé selon la revendication 8, dans lequel ledit nombre de paquets ayant fait l'objet d'un accusé de réception est déterminé sur la base d'un taux historique de réception de bouquet.

11. Procédé selon la revendication 8, dans lequel ledit nombre de paquets ayant fait l'objet d'un accusé de réception est déterminé sur la base d'une caractéristique desdites données.

12. Procédé selon l'une quelconque des revendications précédentes, dans lequel ledit protocole de transport fiable non modifié est le protocole de contrôle de transport, TCP.

13. Procédé selon l'une quelconque des revendications précédentes, dans lequel ledit relais est basé sur le protocole de traversée utilisant des relais autour de NAT, TURN.

14. Procédé selon l'une quelconque des revendications précédentes, ledit procédé comprenant en outre :
le relais dudit second paquet en utilisant l'un du protocole de datagramme utilisateur, UDP, ou du protocole de transport en temps réel, RTP, sur UDP.

15. Serveur (200) comprenant :
un processeur (208) ;
une interface réseau (232) connectée fonctionnellement audit processeur (208) ;
ledit processeur (208) étant configuré pour exécuter le procédé selon l'une quelconque des revendications précédentes.
